# FASCICULE DE BREVET EUROPEEN

(11) **EP 1 200 751 B1**
(45) Date de publication et mention de la délivrance du brevet: **26.11.2008**
(21) Numéro de dépôt: 01931806.2
(22) Date de dépôt: 04.05.2001
(51) Int. Cl.: F16D 13/64, F16D 13/68

(54) **DISQUE POUR EMBRAYAGE A FRICTION RIGIDE**
SCHEIBE FÜR EINE STARRE REIBUNGSKUPPLUNG
DISC FOR RIGID FRICTION CLUTCH

(30) Priorité: 10.05.2000 FR 0005970
(43) Date de publication de la demande: 02.05.2002
(73) Titulaire: VALEO EMBRAYAGES s.a.s., 80009 Amiens Cedex 1 (FR)
(72) Inventeur: LEFOLLE, Laurent, F-80340 Proyart (FR); VILLATA, Gino, F-93585 Saint-Ouen (FR); TERNOY, Nicolas, F-80700 Roye (FR); BOERO, Bruno, F-93585 Saint-Ouen (FR); SOIRANT, Maryse, F-80260 Naours (FR)
(74) Mandataire: Lemaire, Marc
(86) Numéro de dépôt international: PCT/FR2001/001376
(87) Numéro de publication internationale: WO 2001/086162

(56) Documents cités:
- EP-A- 0 764 793
- DE-A- 4 322 578
- DE-B- 1 210 266
- FR-A- 2 724 995
- US-A- 4 352 420
- US-A- 4 966 269
- US-A- 5 984 073

## Description

L'invention concerne un embrayage à friction rigide, en particulier pour véhicule automobile.

Dans un embrayage équipé d'un volant amortisseur qui est capable d'assurer l'absorption et l'amortissement des vibrations et des irrégularités de couple transmises par l'arbre moteur, l'amortisseur de torsion prévu en général entre le disque de friction et le moyeu solidaire en rotation de l'arbre mené est supprimé et le disque de friction est fixé sur un voile annulaire comportant une denture interne en prise sensiblement sans jeu avec une denture externe du moyeu.

Ce montage doit être à même de compenser les désalignements inévitables entre l'arbre moteur et l'arbre mené, qui sont la cause de bruits et d'usures.

On a déjà proposé à cette fin de monter des moyens élastiques de rattrapage de jeu et d'amortissement .avec effet d'hystérésis entre le disque et le moyeu ou entre le moyeu et le voile annulaire sur lequel est fixé le disque de friction. Toutefois, cela conduit à des systèmes qui sont relativement complexes du point de vue de la structure et de l'assemblage.

L'état de la technique le plus proche de l'invention est le document DE 4322578.

L'invention a notamment pour but d'apporter une solution simple, efficace et économique à ce problème.

Elle propose, à cet effet, un embrayage à friction rigide, comprenant un disque portant des garnitures de friction, un voile annulaire solidaire du disque, et un moyeu solidarisable en rotation avec un arbre mené et comprenant une denture externe qui engrène avec une denture interne du voile, caractérisé en ce que le voile est appliqué axialement sur des éléments périphériques du moyeu par un élément élastique.

Cet élément élastique peut être constitué soit par une rondelle métallique dont la périphérie interne est calée axialement sur le moyeu et dont la périphérie externe est en appui sur le voile, soit par le disque de friction qui s'étend radialement jusqu'au moyeu et coopère avec le voile pour serrer élastiquement entre eux des éléments périphériques du moyeu.

Un avantage essentiel de l'invention est que le voile est monté élastiquement sur le moyeu sans pièce intermédiaire, son serrage élastique sur le moyeu permettant une adaptation automatique des positions relatives du disque fixé sur le voile et du moyeu et une compensation des désalignements entre l'arbre moteur et l'arbre mené.

Dans une forme de réalisation de l'invention, lesdits éléments périphériques du moyeu sont des prolongements radiaux, orientés vers l'extérieur, des dents externes du moyeu et forment une butée sur laquelle le voile s'appuie axialement à sa périphérie interne.

Dans une autre forme de réalisation de l'invention, lesdits éléments périphériques s'étendent circonférentiellement entre les dents du moyeu et forment une butée sur laquelle la denture interne du voile s'appuie axialement.

De plus, la périphérie radialement interne du disque comporte un rebord de guidage coopérant avec une portée de forme conjuguée présentée par une extrémité axiale de la denture externe du moyeu, ce rebord de guidage et cette portée étant avantageusement tronconiques.

Dans un mode de réalisation préféré de l'invention, le rebord de guidage formé à la périphérie radialement interne du disque de friction comporte des fentes radiales lui conférant une élasticité.

Cette élasticité simple à réaliser permet le serrage élastique du moyeu entre le disque de friction et le voile annulaire.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de face d'un premier mode de réalisation de l'invention ;
- la figure 2 est une vue en coupe axiale selon la ligne II-II de la figure 1 ;
- la figure 3 est une vue à plus grande échelle d'une partie de la figure 2 ;
- la figure 4 est une vue de face du moyeu ;
- la figure 5 est une vue en coupe du moyeu selon la ligne V-V de la figure 4 ;
- les figures 6 et 7 sont des vues semblables aux figures 1 et 2, mais représentent une variante de réalisation de l'invention ;
- les figures 8 et 9 sont des vues semblables aux figures 3 et 5 pour deux variantes de réalisation de l'invention.

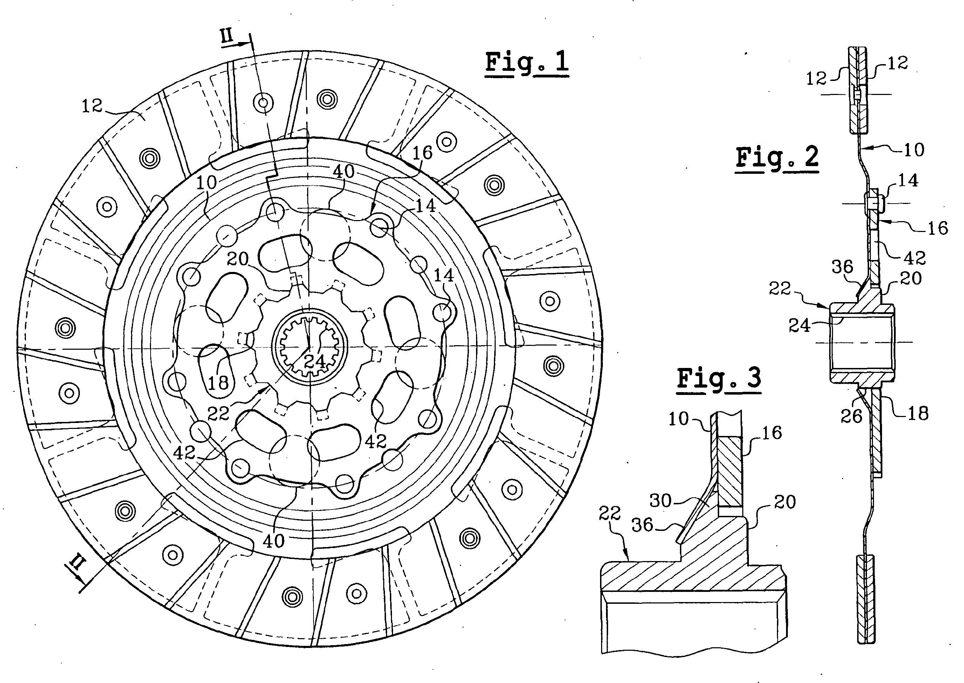

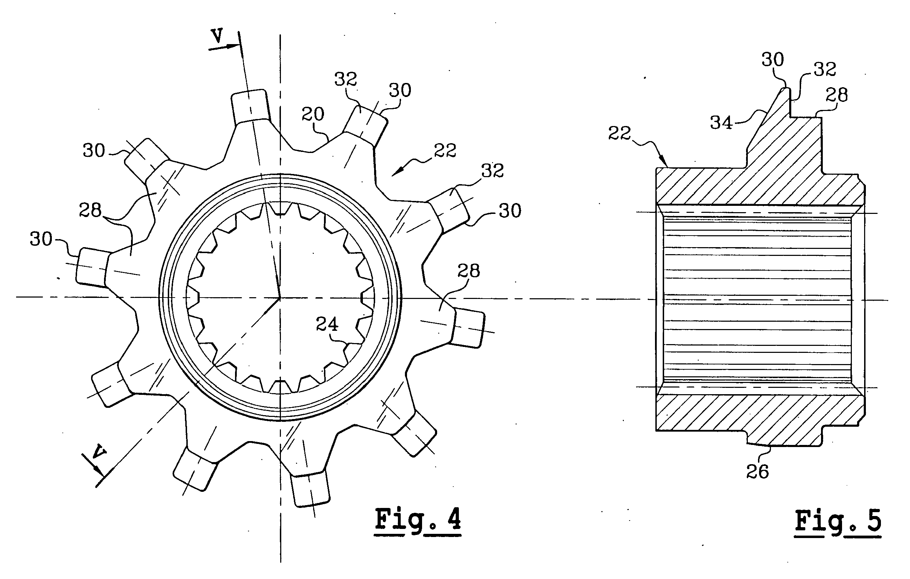

On se réfère d'abord aux figures 1 à 5 représentant une première forme de réalisation de l'invention, dans lesquelles la référence 10 désigne un disque de friction d'embrayage, qui porte des garnitures de friction 12 sur ses deux faces à sa périphérie externe et qui est fixé dans sa partie médiane, au moyen de rivets 14, sur un voile annulaire 16 au voisinage de la périphérie externe de celui-ci.

La périphérie interne du voile 16 est formée avec une denture 18 qui engrène, sensiblement sans jeu, avec la denture externe 20 d'un moyeu 22 dont la surface interne comporte des cannelures ou analogues 24 permettant de le solidariser en rotation avec un arbre mené (non représenté) tel que l'arbre d'entrée d'une boîte de vitesses.

La denture externe 20 du moyeu est formée sur un rebord périphérique 26 dont l'épaisseur ou dimension axiale est supérieure à celle de la denture 18 du voile, et dont le diamètre extérieur est supérieur au diamètre périphérique interne du voile 16, c'est-à-dire au diamètre du fond des intervalles entre les dents de la denture interne de ce voile. Ainsi, les sommets des dents 28 du moyeu sont prolongées radialement vers l'extérieur, à une extrémité axiale du rebord 26, par des doigts 30 qui ont une face radiale annulaire 32 du côté des dents 28 et une face oblique 34, en forme de secteur de tronc de cône, du côté opposé. Lorsque le voile annulaire 16 est en place sur le rebord périphérique 26 du moyeu comme représenté aux figures 2 et 3, les dentures 18 et 20 du voile et du moyeu étant en prise, les faces annulaires planes 32 des doigts précités 30 forment une butée axiale contre laquelle s'applique le voile annulaire 16 au voisinage de sa périphérie interne.

Les faces opposées 34 des doigts 30 délimitent une portée tronconique sur laquelle est appliquée un rebord tronconique 36 formé à la périphérie interne du disque de friction 10.

Le rebord tronconique 36 n'est pas continu et est constitué de plusieurs pattes obliques réparties autour de l'axe de rotation et séparées les unes des autres par des fentes. De façon simple, on peut commencer par faire des fentes radiales dans la partie annulaire radialement interne du disque 10, puis plier vers l'extérieur en oblique les pattes délimitées par ces fentes radiales, pour obtenir le rebord tronconique 36 précité.

De cette façon, les doigts 30 du rebord périphérique 26 du moyeu sont serrés élastiquement entre le voile annulaire 16 et le rebord tronconique 36 du voile 10, ce serrage élastique permettant d'adapter les positions relatives du disque 10 et du moyeu 22 pour compenser les désalignements inévitables entre un arbre moteur relié au disque de friction 10 par un double volant amortisseur et l'arbre mené qui est solidaire en rotation du moyeu 22.

Dans cet exemple de réalisation, les intervalles entre les dents 28 externes du moyeu 22 sont débouchant aux deux extrémités axiales du rebord 26 sur lequel sont formées les dents 28.

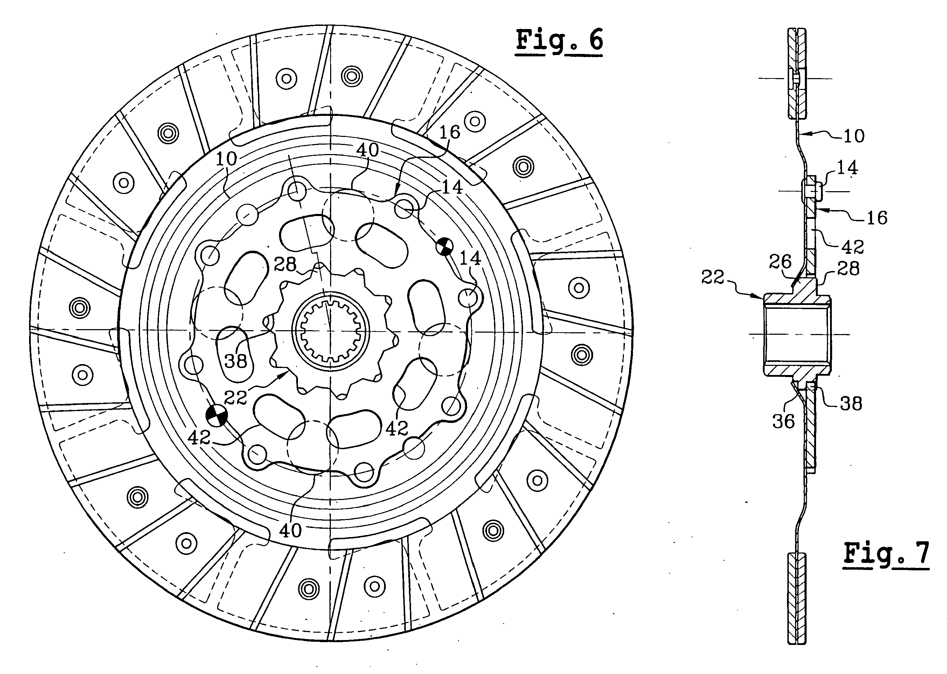

Dans la variante de réalisation représentée aux figures 6 et 7, les dents 28 s'étendent sur toute l'épaisseur axiale du rebord périphérique 26, qui ne comprend pas les doigts 30 précités, mais les intervalles entre les dents 28 sont formés depuis une face d'extrémité de rebord périphérique 26 sur une partie seulement de son épaisseur. Des butées axiales sont ainsi ménagées, pour les dents internes 38 du voile annulaire 16, dans les intervalles entre les dents 28 externes du moyeu 22. L'autre face d'extrémité du rebord périphérique 26, opposée à celle comportant les intervalles entre les dents 28, forme une portée tronconique coopérant avec un rebord tronconique 36 de la périphérie interne du disque 10, comme dans le mode de réalisation des figures 1 à 5.

Le moyeu 22 représenté aux figures 6 et 7 se prête à une réalisation par frittage. Celui des figures 1 à 5 est réalisable par usinage, notamment par décolletage, tournage et brochage.

Comme on le voit bien sur les figures 1, 2 ,6 et 7, les parties annulaires du disque 10 et du voile 16 qui sont appliquées l'une contre l'autre comportent des orifices de passage d'air 40, 42 respectivement, qui sont par exemple circulaires pour le disque 10 et oblongs pour le voile 16, ces orifices étant décalés angulairement les uns par rapport aux autres autour de l'axe de rotation de telle sorte que, par exemple, un orifice circulaire 40 du disque 10 puisse déboucher dans deux orifices oblongs 42 du voile 16.

Comme représenté, il est préférable que le disque 10 soit fixé sur le voile 16 au voisinage de la périphérie externe de ce dernier, pour augmenter l'élasticité de sa fixation sur le moyeu 22 et favoriser la compensation des désalignements entre l'arbre moteur et l'arbre mené.

Il est avantageux également que la partie périphérique externe du voile 16 portant les rivets de fixation du disque 10 soit radialement éloignée du rebord tronconique 36 formé à la périphérie interne du disque 10.

Dans les modes de réalisation des figures 1 à 6, le disque de friction 10 se trouve du côté de l'arbre moteur et du volant amortisseur, et le voile annulaire 16 se trouve, par rapport au rebord 26 du moyeu, de l'autre côté, c'est-à-dire du côté des moyens débrayeurs de l'embrayage.

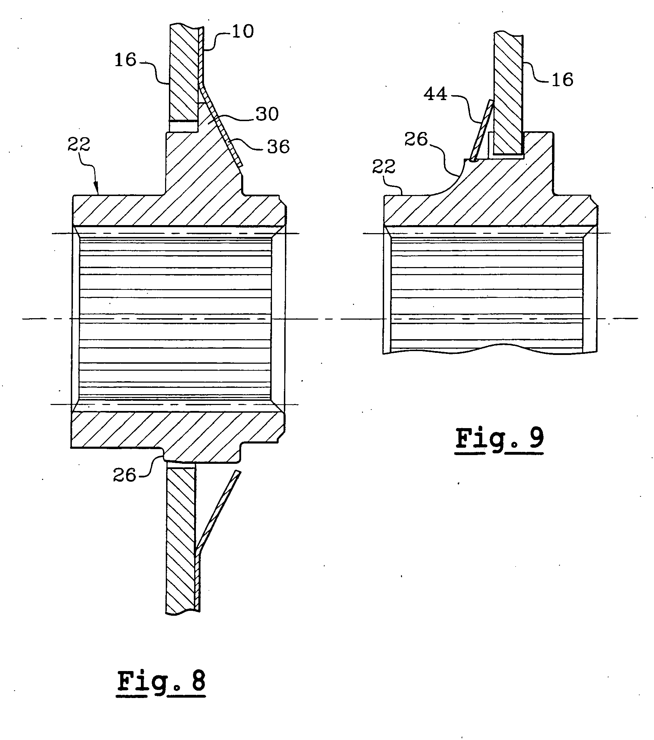

La disposition inverse est bien entendu possible, comme représenté schématiquement en figure 8 où les positions du disque 10 et du voile 16 sur le moyeu 22 ont été inversées. Dans ce cas, la portée tronconique formée par les doigts 30 du moyeu se trouve bien entendu du côté du rebord tronconique 36 de la périphérie interne du disque 10. Cette variante offre l'avantage de diminuer les risques de décollement du voile 16 de ses appuis sur le moyeu 22 lors d'un débrayage quand le disque 10 se déplace vers les moyens débrayeurs et que le coulissement du moyeu sur l'arbre mené se fait mal.

Dans la variante de réalisation de la figure 9, le disque de friction ne s'étend.pas radialement jusqu'au moyeu 22. Le voile 16 est monté sur le moyeu du même côté qu'en figure 8, et est appliqué axialement sur ses appuis sur le moyeu 22 par une rondelle élastique 44 qui se trouve du côté du volant amortisseur et dont la périphérie interne est en appui sur le voile 16 tandis que sa périphérie interne est calée axialement sur le moyeu, et est par exemple engagée dans une gorge annulaire périphérique du rebord 26 du moyeu. Cette rondelle est par exemple une rondelle "clic-clac", dont la courbure s'inverse quand on la met en place par poussée axiale:

Dans la forme de réalisation de la figure 9, le disque 10 peut se trouver d'un côté ou de l'autre du voile 16.

## Revendications

1. Embrayage à friction rigide, comprenant un disque (10) portant des garnitures de friction (12), un voile annulaire (16) solidaire du disque (10) et un moyeu (22) solidarisable en rotation avec un arbre mené et comprenant une denture externe (20) qui engrène avec une denture interne (18) du voile, le voile (16) étant appliqué axialement sur des éléments périphériques (30, 28) du moyeu (22) par un élément élastique, **caractérisé en ce que** le disque (10) s'étend radialement jusqu'au moyeu (22) et coopère avec le voile (16) pour serrer élastiquement entre eux des éléments périphériques (30, 28) du moyeu (22).

2. Embrayage selon la revendication 1, **caractérisé en ce que** lesdits éléments périphériques sont des prolongements radiaux (30), orientés vers l'extérieur, des dents externes (28) du moyeu et forment une butée sur laquelle s'appuie axialement à le voile (16) sa périphérie interne.

3. Embrayage selon la revendication 1, **caractérisé en ce que** lesdits éléments périphériques s'étendent circonférentiellement entre les dents (28) du moyeu (22) et forment une butée sur laquelle s'appuie axialement la denture interne (18) du voile.

4. Embrayage selon l'une des revendications 1 à 3, **caractérisé en ce que** la périphérie radialement interne du disque (10) comporte un rebord de guidage (36) coopérant avec une portée de forme conjuguée présentée par une extrémité axiale d'un rebord périphérique (26) du moyeu.

5. Embrayage selon la revendication 4, **caractérisé en ce que** ledit rebord de guidage (36) et ladite portée sont de forme générale tronconique.

6. Embrayage selon la revendication 4 ou 5, **caractérisé en ce que** le rebord de guidage (36) du disque comporte des fentes radiales lui conférant une élasticité.

7. Embrayage selon l'une des revendications précédentes, **caractérisé en ce que** le disque de friction (10) est fixé sur une partie périphérique du voile annulaire (16) qui est radialement éloignée du moyeu (22).

8. Embrayage selon la revendication 1, **caractérisé en ce que** l'élément élastique est une rondelle métallique dont la périphérie interne est calée sur le moyeu (22) et dont la périphérie externe est en appui sur le voile (16).

9. Embrayage selon l'une des revendications précédentes, **caractérisé en ce que** le moyeu (22) est réalisé par frittage.

10. Embrayage selon l'une des revendications 1 à 8, **caractérisé en ce que** le moyeu (22) est réalisé par usinage, en particulier par décolletage, tournage et brochage.

11. Embrayage selon l'une des revendications précédentes, **caractérisé en ce que** les parties annulaires du disque (10) et du voile (16) appliquées l'une sur l'autre comportent des orifices (40, 42) de passage d'air.

## Claims

1. Rigid friction clutch, comprising a disc (10) which supports friction linings (12), an annular covering (16) which is integral with the disc (10) and a hub (22) which can be rendered integral in rotation with a driven shaft, and comprising outer toothing (20) which engages with inner toothing (18) of the covering, the covering (16) being applied axially onto peripheral elements (30, 28) of the hub (22) by a resilient element, **characterised in that** the disc (10) extends radially as far as the hub (22) and co-operates with the covering (16) in order to clamp resiliently between them peripheral elements (30, 28) of the hub (22).

2. Clutch according to claim 1, **characterised in that** the said peripheral elements are radial extensions (30), which are oriented towards the exterior, of the outer teeth (28) of the hub, and form a stop, the inner periphery of which is supported axially on the covering (16).

3. Clutch according to claim 1, **characterised in that** the said peripheral elements extend circumferentially between the teeth (28) of the hub (22) and form a stop on which the inner toothing (18) of the covering is supported axially.

4. Clutch according to one of claims 1 to 3, **characterised in that** the radially inner periphery of the disc (10) comprises a guiding shoulder (36) which co-operates with a bearing surface with a conjugated form provided by an axial end of a peripheral shoulder (26) of the hub.

5. Clutch according to claim 4, **characterised in that** the said guiding shoulder (36) and the said bearing surface have a generally frusto-conical form.

6. Clutch according to claim 4 or 5, **characterised in that** the guiding edge (36) of the disc comprises radial slots which provide it with resilience.

7. Clutch according to one of the preceding claims, **characterised in that** the friction disc (10) is secured to a peripheral part of the annular covering (16) which is radially spaced from the hub (22).

8. Clutch according to claim 1, **characterised in that** the resilient element is a metal washer, the inner periphery of which is wedged onto the hub (22) and the outer periphery of which is supported on the covering (16).

9. Clutch according to one of the preceding claims, **characterised in that** the hub (22) is produced by means of sintering.

10. Clutch according to one of claims 1 to 8, **characterised in that** the hub (22) is produced by machining, and in particular by slicing, turning and broaching.

11. Clutch according to one of the preceding claims, **characterised in that** the annular parts of the disc (10) and the covering (16) applied to one another comprise apertures (40, 42) for passage of air.

## Patentansprüche

1. Starre Reibungskupplung, umfassend eine Reibbeläge (12) tragende Scheibe (10), einen fest mit der Scheibe (10) verbundenen ringförmigen Flansch (16) und eine drehfest mit einer Abtriebswelle verbindbare Nabe (22) mit einer Außenverzahnung (20), die mit einer Innenverzahnung (18) des Flanschs ineinander greift, wobei der Flansch (16) durch ein elastisches Element axial auf Umfangselemente (30, 28) der Nabe (22) aufgebracht ist, **dadurch gekennzeichnet, dass** die Scheibe (10) sich radial bis zur Nabe (22) erstreckt und mit dem Flansch (16) zusammenwirkt, um die Umfangselemente (30, 28) der Nabe (22) elastisch zwischen sich einzuspannen.

2. Kupplung nach Anspruch 1, **dadurch gekennzeichnet, dass** die besagten Umfangselemente nach außen gerichtete radiale Verlängerungen (30) der äußeren Zähne (28) der Nabe sind und einen Anschlag bilden, an den sich der Innenumfang des Flanschs (16) axial anlegt.

3. Kupplung nach Anspruch 1, **dadurch gekennzeichnet, dass** sich die besagten Umfangselemente umfangsmäßig zwischen die Zähne (28) der Nabe (22) erstrecken und einen Anschlag bilden, an den sich die Innenverzahnung (18) des Flanschs axial anlegt.

4. Kupplung nach einem der Ansprüche 1 bis 3, **dadurch gekennzeichnet, dass** der radial innere Umfang der Scheibe (10) einen Führungsrand (36) umfasst, der mit einer Auflagefläche entsprechender Form zusammenwirkt, die durch ein axiales Ende eines Umfangsrands (26) der Nabe gebildet wird.

5. Kupplung nach Anspruch 4, **dadurch gekennzeichnet, dass** der besagte Führungsrand (36) und die besagte Auflagefläche eine kegelstumpfförmige Grundform haben.

6. Kupplung nach Anspruch 4 oder 5, **dadurch gekennzeichnet, dass** der Führungsrand (36) der Scheibe radiale Schlitze aufweist, die ihm eine Elastizität verleihen.

7. Kupplung nach einem der vorherigen Ansprüche, **dadurch gekennzeichnet, dass** die Reibscheibe (10) an einem Umfangsteil des ringförmigen Flanschs (16) befestigt ist, der radial von der Nabe (22) entfernt ist.

8. Reibungskupplung nach Anspruch 1, **dadurch gekennzeichnet, dass** das elastische Element eine metallische Scheibe ist, deren Innenumfang auf der Nabe (22) verkeilt ist und deren Außenumfang an dem Flansch (16) anliegt.

9. Kupplung nach einem der vorherigen Ansprüche, **dadurch gekennzeichnet, dass** die Nabe (22) durch Sintern hergestellt ist.

10. Reibungskupplung nach einem der Ansprüche 1 bis 8, **dadurch gekennzeichnet, dass** die Nabe (22) durch spanende Bearbeitung, insbesondere durch Automatendrehen, Drehen und Bohren hergestellt ist.

11. Kupplung nach einem der vorherigen Ansprüche, **dadurch gekennzeichnet, dass** die aufeinander aufgebrachten ringförmigen Teile der Scheibe (10) und des Flanschs (16) Luftdurchgangsöffnungen (40, 42) aufweisen.
